# EUROPEAN PATENT APPLICATION

(11) **EP 3 001 658 A1**
(43) Date of publication of application: **30.03.2016**
(21) Application number: 14186167.4
(22) Date of filing: 24.09.2014
(51) Int. Cl.: H04M 3/42

(54) **Call handling device, server, system and methods**

(71) Applicant: Rimota Limited, London NW8 9UJ (GB)
(72) Inventor: Falter, Michael, London, Greater London NW8 9UJ (GB); Falter, Gideon, London, Greater London NW8 9UJ (GB); Cole, Anthony, Stoke Gifford, Bristol BS34 8TY (GB); Jenkins, Matthew, London, Greater London NW3 3JN (GB); Sirmon, James, Twickenham, Middlesex TW2 7PU (GB)

(57) **Abstract**

A call handling device (200) comprising: a broadband internet connector (220); a telephone landline connector (230); an analogue audio interface (235) for converting an analogue audio signal into a digital signal; a processor (240); and a memory (250, 252, 254), the call handling device (200) being adapted to detect a call via the telephone landline connector; convert analogue audio data received from the telephone connector into digital audio data; and send the digital audio data to a remote computer (100) by means of the broadband internet connector.

## Description

### TECHNICAL FIELD

The present invention relates to a call handling device, a server operating in conjunction with the device, a system including the device and the server, and methods of carrying out telephony operations. The call handling device, server, system and methods are suitable to provide additional functionality to an analogue audio telephone system. The present invention is also applicable to VOIP systems.

### BACKGROUND OF THE INVENTION

Traditionally, landline telephony has been delivered through a copper wire telephone network. Over time, this has been upgraded, for example to include fibre-optic or satellite communication over long distances. However, the functionality available to the end user has remained largely the same, relying mostly on the same technology and signalling protocols. This means that in terms of voice telephony, analogue landlines can provide duplexed audio and minimal signalling, but little additional functionality, and this limitation is engrained in the infrastructure used to deliver the basic voice telephony service known as Plain Old Telephone Service, or POTS.

Some landline network operators have added to POTS by offering call handling features such as voicemail or call forwarding. To offer such features over POTS requires the network operator to install centralised systems which provide services at network or exchange level. For example, to provide call forwarding to a POTS subscriber, usually the subscriber must use their telephone keypad to enter a sequence (usually a lengthy one) which informs the network operator's central system that the subscriber wishes to enable call forwarding, and the telephone number to which they would like their calls forwarded. This can normally only be done through the telephone keypad and modern features such as voicemail to e-mail, or rule-based call forwarding are normally not available.

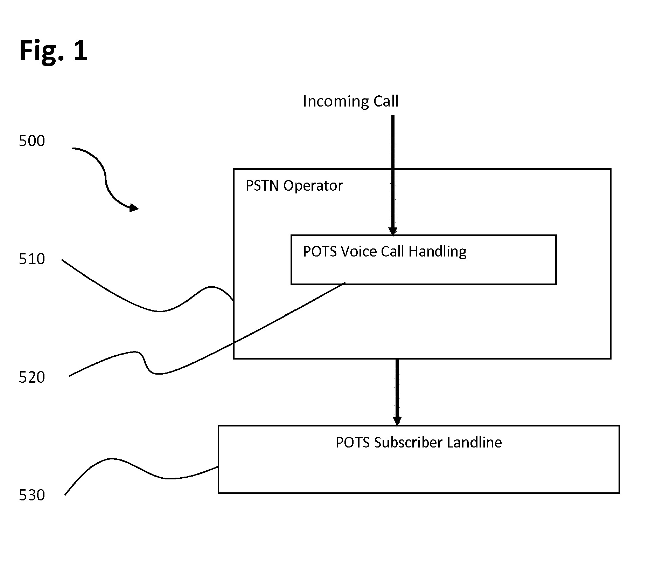

Figs. 1-3 show how a network operator can enable call forwarding over POTS. More specifically, Fig. 1 shows a POTS system 500 in which an incoming call is received at a public switched telephone network (PSTN) 510 of a network operator. The call is routed through a POTS voice call handling module 520 and routed directly to a POTS subscriber's number (landline) 530.

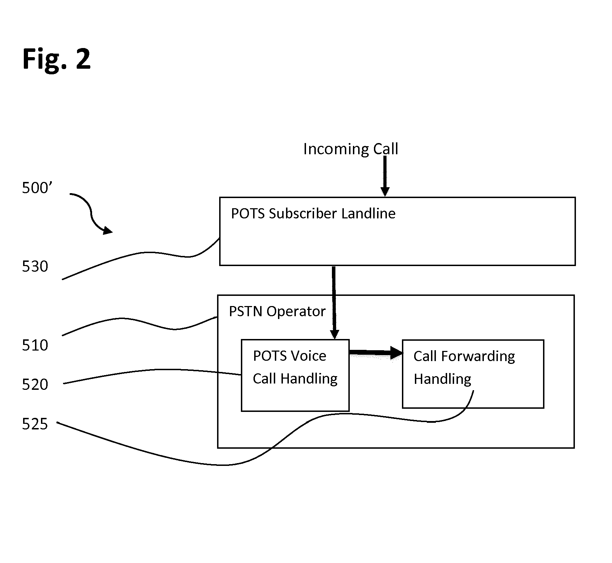

Some PSTN operators offer call forwarding by providing a call forwarding handling module 525 in the network 510 to provide a POTS system 500' as shown in Fig. 2. To enable call forwarding, POTS subscribers must call the PSTN operator 510 from their landline 530 and enter a DTMF (Dual-Tone MultiFrequency) code which typically consists of two parts: a code which enables call forwarding followed by the telephone number to which they would like their calls forwarded. There is usually no visual confirmation allowing the subscriber to check that they entered the forwarding number correctly. The DTMF code is received by the voice call handling module 520 and passed to the call forwarding handling module 525 for future processing.

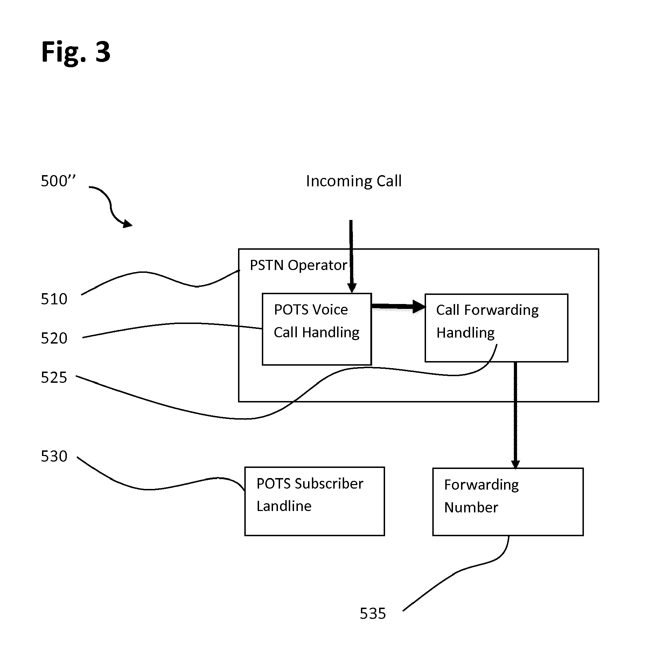

Once call forwarding is enabled, incoming calls to the POTS subscriber's number 530 are passed to the call forwarding handling module 525 and then to the call forwarding number 535, as shown in Fig. 3. This is all handled within the PSTN operator's systems.

Due to the limited configuration options inherent in a telephone handset/DTMF-based interface, the complexity and modernity of the call features delivered by PSTN operators over POTS is severely limited, which has been responsible, along with signalling limitations, for preventing the delivery of more modern call features over POTS.

Technology such as ADSL (Asymmetric Digital Subscriber Line) has also been developed. ADSL permits the delivery of high-speed broadband internet over a traditional analogue telephone landline. Broadband internet may be defined as a constantly-connected internet connection that allows downloading and uploading of data. This has enabled the provision of telephony over the internet to any landline subscriber with a broadband connection, using a collection of protocols known as VOIP (Voice Over Internet Protocol). Whereas VOIP services usually offer modern features, should the internet connection slow down or be cut off, the VOIP service becomes intermittent, stops entirely, or call quality is impaired.

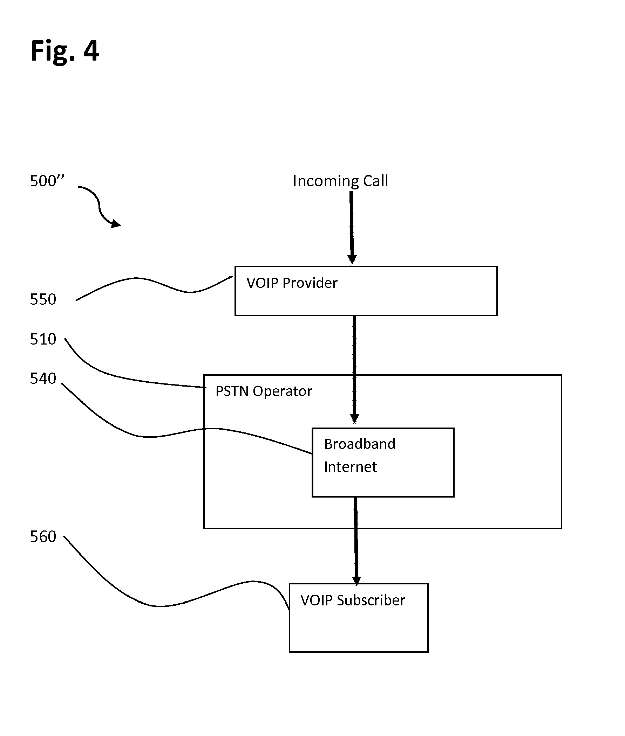

Fig. 4 illustrates a system 500" for the provision of VOIP. In particular, Fig. 4 shows a system 500" in which an incoming VOIP call is received by a VOIP provider 550 and forwarded to a VOIP subscriber 560 via the broadband internet service 540 of a PSTN operator 510. As shown in the figure, the provision of the VOIP service is entirely dependent on a stable internet connection. Additionally, VOIP services cannot be used over a POTS system because incoming calls are routed directly to the VOIP provider, which uses the internet to route the call to the subscriber, not a hardwired telephone network.

Broadband delivered over traditional landlines has bandwidth limitations, and consequently large organisations have turned to more modern infrastructure for their broadband services, such as high-speed fibre-optic connections. Dedicated high-speed connections such as these can support large numbers of VOIP sessions simultaneously over a single connection, providing the service reliably enough that large organisations have migrated away from traditional landlines in favour of ultra high-speed connections. This is commonly known as enterprise VOIP and the widespread availability to large organisations of dedicated ultra high-speed broadband has allowed them to adopt enterprise-grade VOIP telephony.

The divergence of traditional analogue landline telephony and advanced VOIP-based telephony over ultra high-speed broadband has led to a very large functionality gap between analogue landline telephony and VOIP-based telephony.

Whereas analogue landline technology has developed very slowly, VOIP-based telephony has advanced very quickly, offering the most advanced call features.

Table 1 below provides a comparison of the infrastructure, hardware and software requirements of three technologies described above: POTS, VOIP over broadband and enterprise VOIP.

Table 2 below shows the features available to users of analogue lines in a traditional POTS, VOIP over broadband and enterprise VOIP.

As Table 1 shows, the standard requirements of a POTS system are very simple and most homes and small office meet these requirements. Similarly, although more demanding, the requirements for a VOIP over broadband system are met by increasing numbers of homes and small businesses. However, the infrastructure, hardware and software requirements to set up and run an enterprise VOIP system are onerous and expensive.

**Table 1**

| **Requirements** | **Analogue Landline (POTS)** | **VOIP Over Broadband** | **Enterprise VOIP** |
|---|---|---|---|
| **Infrastructure** | Standard analogue telephone landline | Standard analogue telephone landline with broadband internet and consistent upload bandwidth | High-speed high-reliability internet connection, such as fibre optic cabling |
| **Hardware** | Standard POTS-capable telephone | Broadband internet router connected to VOIP-capable telephone | Enterprise-grade corporate computer network, dedicated servers and VOIP- capable telephones |
| **Software** | None | VOIP-capable firmware on telephone | Advanced proprietary serversoftware and firmware |
| **Installation** | Performed by PSTN engineer (most buildings already have a line which can be used by new subscribers) | Complicated configuration of internet router to enable VOIP by an expert user or ICT professional | Performed by ICT professionals familiar with the system to be installed, following which specialist maintenance is required |

**Table 2**

| **Features** | **Analogue Landline** | **VOIP Over Broadband** | **Enterprise VOIP** |
|---|---|---|---|
| **Emergency Calls** | Yes | No | Yes |
| **Works without Internet** | Yes | No | No, butvery unlikely to lose connection |
| **Voicemail** | Basic version can be provided by network operators or hardware answering machines | Advanced | Advanced |
| **Call Forwarding** | Can only be provided by network operators | Advanced | Advanced |
| **Call Recording** | No | Yes | Yes |
| **Unknown Number Blocking** | Basic version without dynamic blocking can be provided by network operators or hardware call blockers | Yes | Yes |
| **Dynamic Automated Spam Call Blocking** | No | Yes | Yes |
| **Global Spam Caller Database** | No | No | No |
| **OutofHours Handling** | No | Yes | Yes |
| **Call History** | No | Yes | Yes |
| **Fax** | Can be provided with hardware fax machine | Yes | Yes |
| **Custom Call Routing** | No | Yes | Yes |
| **Switchboard (Private Branch Exchange)** | Can be provided with additional hardware | Yes | Yes |

Consequently, from the point of view of a consumer or a small business with few employees (less than ten), it is not economically justifiable to purchase an enterprise VOIP system. As previously noted, such systems are expensive, extremely complex and require special infrastructure to operate. For example, a basic enterprise VOIP system with features such as voicemail to e-mail and call forwarding normally costs hundreds of pounds, if not thousands of pounds, requires installation and maintenance by a specialist technician and relies on infrastructure such as enterprise-grade fibre broadband, an e-mail server, dedicated Ethernet cabling and hardware mounted in a server rack. They therefore tend only to be adopted by small business which either a) need a very complex telephony system as it is a core part of their business (for example an estate agency, where staff are heavy telephone users); or b) use a serviced office in a block of serviced offices, where economies of scale may make an enterprise VOIP system viable. For the vast majority of small businesses, an enterprise VOIP system is therefore not viable.

Eschewing enterprise VOIP systems, the remaining telephony options are a traditional analogue landline or VOIP over broadband. As shown in the previous table, analogue landlines are very feature-poor but reliable, as well as being simple to operate and inexpensive. VOIP over broadband is feature-rich and inexpensive, but it can be complex to set up and, as shown in figure 4, it is totally reliant on a good broadband connection, which can make the VOIP over broadband unreliable, as described above. Additionally, due to the way in which most broadband internet is delivered, premises with broadband normally must also have an analogue landline (although sometimes broadband is delivered without an analogue landline, for example in the case of broadband provided via cable television networks).

This leaves small businesses and consumers with a lack of choice, as they are unlikely to use enterprise VOIP, and if they want feature-rich telephony which is not dependent on an unreliable internet connection speed, they do not have a good option. Small businesses and home consumers generally prefer to use existing analogue landlines and are likely to be more resistant to adopting VOIP over broadband technologies and generally prefer to use existing analogue landlines for most day to day calls. As such, they miss out on the many useful features of enterprise VOIP services.

The concept of caller ID is well-known in the art and there are many different standards. Caller ID signals are commonly transmitted down a landline with the call, these signals often being inaudible. Transmission of the caller ID signal may be delayed compared to transmission of the call and some operators delay transmission of the caller ID until after the phone starts ringing. Caller IDs typically identify the number of the telephone making the call, although other things may be identified as well or instead. In this specification, the expression "caller ID" encompasses the caller ID signal itself and/or any other related identification of the phone number or other information identified by the caller ID signal.

### SUMMARY

According to a first aspect of the present invention, there is provided a call handling device comprising:
- a broadband internet connector;
- a telephone landline connector;
- an analogue audio interface for converting an analogue audio signal into a digital signal;
- a processor; and
- a memory,
- the call handling device being adapted to
- detect a call via the telephone landline connector;
- convert analogue audio data received from the telephone connector into digital audio data; and
- send the digital audio data to a remote computer by means of the broadband internet connector.

The call handling device may also be suitable for operation with a VOIP system rather than a telephone landline. As such, the telephone landline connector may be omitted and analogue audio interface may be omitted or replaced with a translator for translation of VOIP signals into data that can be handled by the call handling device and the remote computer.

Preferably, when a call is received, the processor is arranged to store at least one of the digital audio data and other call information relating to the call in the memory and to send the stored data to the remote computer.

Preferably the call handling device is configured further to send to the remote computer an identifier of the call handing device.

Preferably the call handling device is configured to receive configuration data from a remote computer (100) for setting a mode of operation of the call handling device.

Preferably the call handling device has a voicemail mode, wherein the configuration data includes a voicemail message.

Preferably the call handling device has a call routing mode, the configuration data including routing data for routing a received call depending on a signal indicating a key pressed by or other input from the caller.

Preferably the call handling device has a time-based handling mode for handling a call based on the current time and/or date, the configuration data setting a call handling action corresponding to a predetermined time of day and/or time or date range.

Preferably the call handling device has a call recording mode.

Preferably the call handling device is configured to detect outgoing calls by detecting a parallel pick up in the absence of a ring on the line and to store an identification relating to the dialled number; and to detect an incoming call by detecting a ring on the line and to store the caller ID of the incoming call.

Preferably the call handling device has a call forwarding mode, the call handling device storing a configuration file to instruct a VOIP stack to forward the call via VOIP over the broadband connection.

Preferably the call handling device has a call blocking mode, the call handling device storing at least one of a predetermined duration and a predetermined number of rings needed to determine whether a caller ID signal is received and being configured to disconnect an incoming call that has not been associated with a caller ID signal after the predetermined duration or number of rings.

Preferably the call handling device stores a blacklist of caller IDs and is configured to disconnect a call associated with a caller ID on the blacklist.

Preferably the call handling device is configured to download the caller IDs for the blacklist from a remote computer.

Preferably the call handling device is configured to send the caller IDs on the blacklist to a remote computer, or to cause the caller IDs on the blacklist to be sent to the remote computer.

According to another aspect of the present invention, there is provided a telephone system, comprising:
- at least one call handling device according to any one of the preceding claims; and
- a remote computer,
- wherein the call handling device (200) is connected to a land line of a telephone network and to the remote computer by a broadband connection.

According to another aspect of the present invention, there is provided a computer arranged to receive digital audio data from a call handling device according to any one of the preceding claims in a series of segments, the digital audio data corresponding to a call, to arrange transcription of the digital audio data by speech recognition, preferably whilst receiving further segments associated with the same call, and to send a transcription of the digital audio data to a destination associated with the particular call handling device after the call is completed. The computer may be provided in the telephone system described in the preceding paragraph.

According to another aspect of the present invention, there is provided a computer arranged to
- receive settings for a call handling device for setting an operation of a call handling device according to any one of the preceding claims,
- send a configuration file for instructing the call handling device to operate in accordance with the settings,
- receive call data from the call handling device, and
- process the call data in accordance with the settings.

This computer may be the same computer as the one described in the preceding paragraph and may also be provided in the above-mentioned telephone system. The computer may receive the settings from a user via an internet-enabled device via the internet, for example over the same broadband connection to which the call handling device is connected. The settings may include activating one or more modes (specific examples of the modes are given below but the present invention covers the general functionality of each mode - ie simply voicemail mode, call forwarding mode etc) and configuring the mode(s), for example by setting messages, call routing information, call forwarding information, transcription forwarding information, time-related information and so on.

### BRIEF DESCRIPTION OF THE DRAWINGS

Embodiments of the present invention will now be described by way of example only with reference to the accompanying drawings, in which:
Fig. 1 schematically illustrates a plain old telephone system (POTS);
Fig. 2 schematically illustrates enabling call forwarding on a POTS;
Fig. 3 schematically illustrates call forwarding handling on a POTS;
Fig. 4 is a schematic representation of a VOIP over broadband system;
Fig. 5 is a block diagram showing a call handling device and server connected in a system of the present invention;
Figs. 6A-C are block diagrams showing alternative arrangements of functional components of the call handling device of the present invention;
Fig. 7 is a flow chart showing voicemail handling operations of the call handling device of the present invention;
Fig. 8 is a flow chart showing call recording processing of the call handling device of the present invention;
Fig. 9 is a flow chart showing call forwarding processing of the call handling device of the present invention;
Figs. 10A and 10B are flow charts showing operation used for blocking of unknown numbers according to an embodiment of the present invention;
Fig. 11 is a flow chart showing the construction of a global spam database according to the present invention;
Fig. 12 is a flow chart showing blocking of spam calls according to an embodiment of the present invention; and
Fig. 13 is a flow chart showing updating settings of the call handling device according to an embodiment of the present invention.

### DETAILED DESCRIPTION

Hereinafter, a call handling device, a server operating in conjunction with the call handling device, a system including the device and the server, and methods of carrying out telephony operations according to the present invention will all be described.

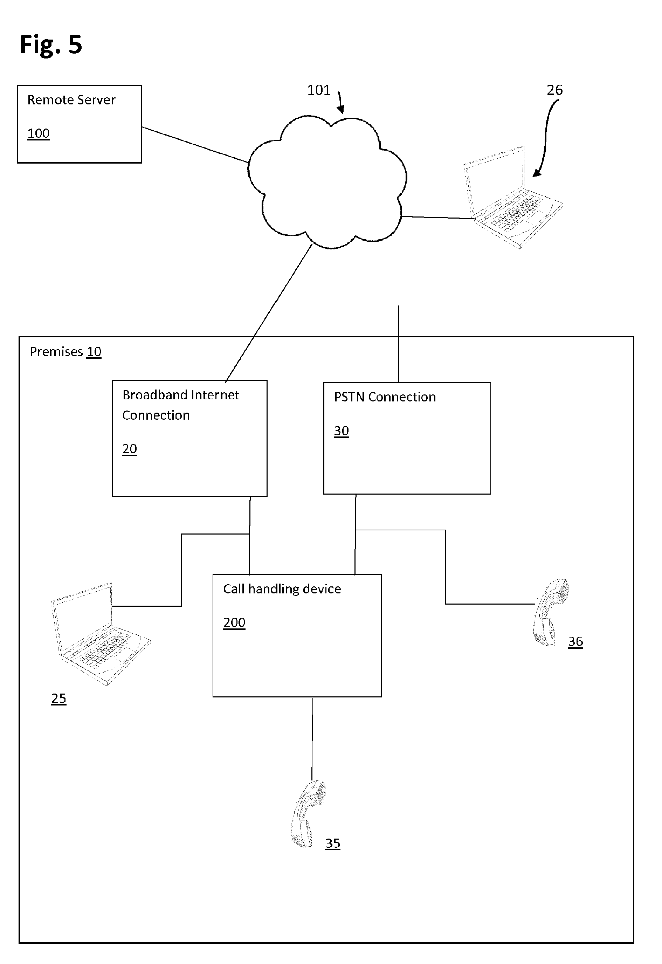

As shown in Fig. 5, the premises of a small business or a home 10 comprise both a broadband connection 20 and a PTSN connection 30, both of which may be provided using a traditional analogue telephone landline into the home. The broadband connection 20 typically comprises a router, which may be a wired and/or wireless router, to act as an interface between internet-enabled devices 25 within the home/small office network and the internet.

In addition, a call handling device 200 according to the present invention is connected to both the broadband connection 20 and the PSTN connection 30. Typically, the call handling device 200 is connected to the broadband connection 20 by means of an Ethernet cable, although it may be connected wirelessly instead. The call handling device 200 is connected to the PSTN connection 30 by means of a standard internal telephone cable. The call handling device 200 may be connected in series between the PSTN connection 30 and one or more other telephony devices 35 (such as a telephone). In addition (or instead) it may be connected in parallel with one or more other telephony devices 36.

As shown in Fig. 5, the call handling device 200 is connected to a remote server 100 over the broadband internet connection 20 via the internet 101 and to a POTS landline over the PSTN connection 30. The call handling device 200 can communicate with the remote server 100 by any known means such as HTTP or SIP. Since the broadband internet connection router 20 sits between the call handling device 200 and the remote server 100, the router may have a firewall or other traffic management rules that interfere with VOIP sessions initiated by the call handling device 200 (described in more detail below). This difficulty can be overcome either by linking behind the firewall to the remote server 100 or another VOIP provider, or by sending the required data for a VOIP session to the remote server 100 via HTTP commands, which the remote server 100 can then code into VOIP and send to the required VOIP subscriber.

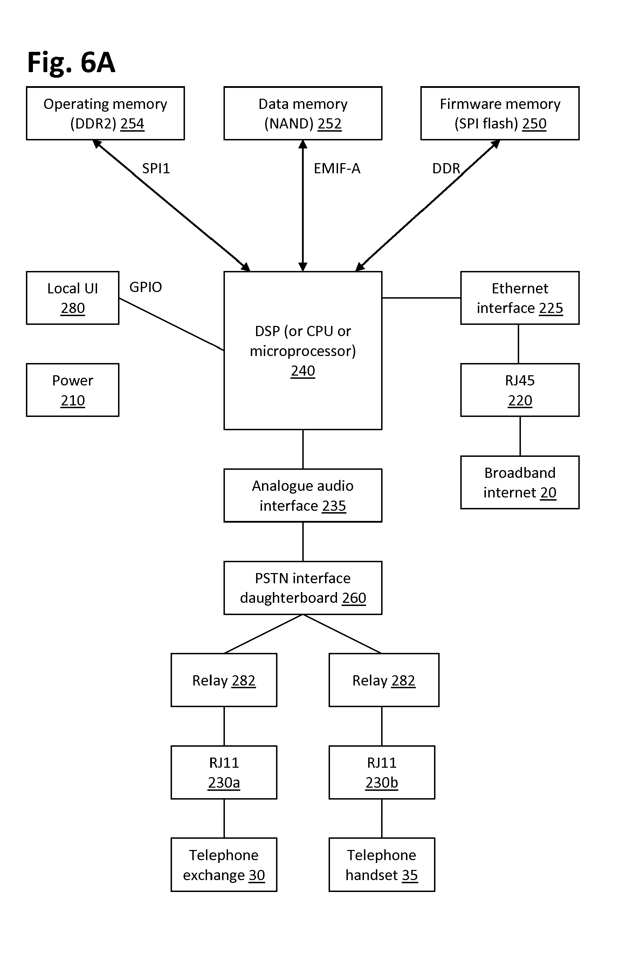

Figs. 6A-C are alternative, non-limiting functional block diagrams of the call handling device 200. As shown in Fig. 6A, the call handling device 200 comprises a power unit 210, which may be plugged into a mains power supply, preferably via a transformer, and provides power to all the other components of the call handling device 200. The call handling device 200 further comprises an RJ45 socket 220 and two RJ11 sockets 230a, 230b. The RJ45 socket 220 socket allows an Ethernet connection to broadband connection device 20, although the call handling device 200 may also be connected to the broadband connection device 20 wirelessly or by another standard wired connection. RJ11 is a telephone line connector standard, and is the most common connector for telephone lines in the world. It can be used in countries that do not use RJ11 by way of a simple adapter. Preferably, two RJ11 connectors 230a, 230b are provided: one RJ11 connector 230a to allow the call handling device 200 to be connected to the telephone exchange (FCO)/PSTN connection 30, and the other 230b to allow the call handling device 200 to be connected to a telephone or other telephony device 35, whereby the call handling device 200 is connected in series between the PSTN connection 30 and the telephone 35. However, multiple RJ11 sockets 230b may be provided so that the call handling device 200 can be connected between the PSTN connection 30 and multiple telephones 35. Alternatively, as previously discussed, the call handling device 200 can be connected to the PSTN connection 30 in parallel with a telephone or other telephony device 36, in which case the RJ11 connector 230b can be omitted or not used. Where more than one RJ11 connector 230 is provided, it is preferred that their functionality is interchangeable. That is, any connector 230 can be used to connect to a telephone 35 or to the PSTN connection 30.

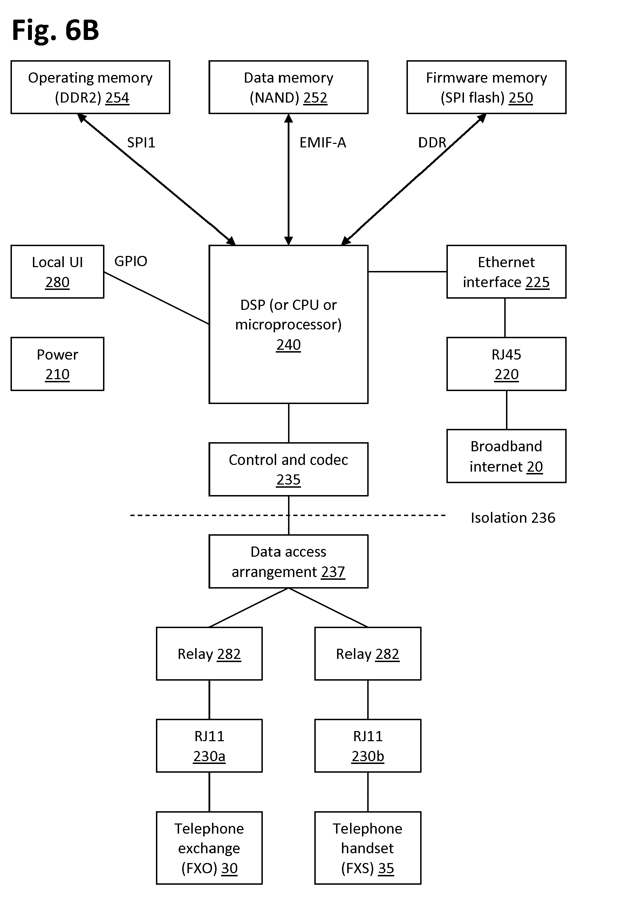

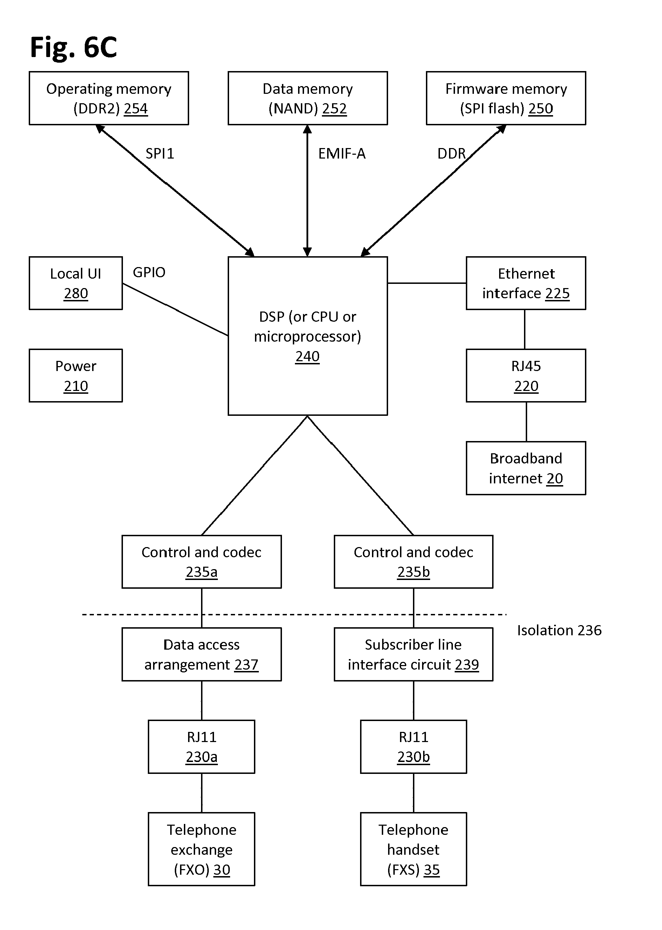

The call handling device 200 further includes a digital signal processor DSP 240, for carrying out data processing operations as discussed below. Any one or more of simple processor, central processing unit (CPU) or microcontroller unit (MCU) may be used as well or instead, so long as processing is fast enough to perform the required operations and calculations. The DSP 240 is connected to the RJ45 connector 220 and via an Ethernet interface 225 as known in the art. Connections between the DSP 240 and other components may be direct or via a bus. The DSP is further connected to each RJ11 connector 230 via an analogue audio interface 235, which may be an audio codec as shown in Figs. 6B & C. The analogue audio interface 235 functions to convert analogue audio signals received from the RJ11 connectors 230 to digital signals for processing by the DSP 240 and to convert digital signals received from the DSP 240 to audio so that they can be transmitted and heard via the RJ11 connectors 230. It should be noted that the DSP 240 may incorporate or carry out the functionality of the analogue audio interface 235. Thus, where the description or appended claims require both an analogue audio interface and a processor, these may be provided by a single unit, chip or integrated circuit.

The analogue audio interface 235 is connected to the RJ11 connectors 230 via a PSTN interface daughterboard 260, which is in turn connected to each RJ11 connector 230 via a respective relay 282, any or all of which are optional. In some configurations, exchange 30 and handset 35 can be connected to RJ11 connectors 230a or 230b interchangeably. The function of the PSTN interface daughterboard 260 is to handle telephone line connection and to tell the DSP 240 when the line is ringing, for example. As in this embodiment, the PSTN module 260 may be provided as a daughterboard, which is connected to the motherboard on which the other components are provided by means of pins, as is known in the art. Preferably, however, the PSTN module's functionality is incorporated in the DSP 240, as shown in Figs. 6B & C. Thus, where the description or appended claims require both a PSTN module and a processor, these may be provided by a single unit, chip or integrated circuit.

In addition, the call handling device 200 is provided with a firmware memory 250, a data memory 252 and an operating memory 254 as is common in the art. These memories may be implemented in ROM, RAM, EEPROM, firmware etc. The DSP 240 may be connected to each memory 250, 252, 254 directly or by means of the bus (not shown). For example, the firmware memory 250 may be provided as a high reliability ROM in which boot code and firmware for operation of the DSP are stored. The data memory 252 may be as a medium reliability flash memory with built in error management in which data such as call details or audio recordings are stored. This is also used as a buffer when the call handling device 200 is unable to communicate with the server. Both the firmware memory 250 and the data memory 252 are non-volatile. The operating memory 254 is used by the DSP 240 to temporarily store code and data that is being processed. In the present embodiment, the firmware memory 250 is implemented using SPI flash memory, the data memory 252 using a NAND memory and the operating memory 254 using a DDR2 (SDRAM) memory.

In Fig. 6B, the functionality of the PSTN daughterboard is provided by the DSP 240. A control and codec 235 is connected to the (optional) relays 282 via a data access arrangement (DAA) 237. The control and codec 235 and the DAA 237 provide the functionality of the audio interface 235. The DAA 237 is a telephone line interface that terminates a traditional twisted-pair telephone line and imitates an analogue phone in applications such as analogue modems, fax machines, telephones and answering machines. The DAA 237 electrically isolates the phone line and central office (CO) equipment from the CPE (Customer-Premises Equipment), which makes it less likely that failure of one would permanently affect the other. The DAA 237 also enables various features such as caller ID, ring detection and numerical dialling. In a VoIP box, the DAA 237 can connect a user to the switched network to make a standard telephone call, or it can also convert a telephone call from a digital packet-based data network to an analogue signal over the local switched network, and vice versa. The DAA 237 must meet the electrical specifications dictated by the regulatory authority in the country of service. Products should be tested and certified to meet each country's specifications before being shipped into the target country.

As Fig. 6B shows, an isolation barrier 236 is provided between the control and codec 235 and the DAA 237. This is may be comprised of capacitors, transformers or octo-couplers which prevents voltage fluctuations in the PSTN equipment from causing damage to the rest of the device, and vice versa. Isolation barriers are well known in the art.

In Fig. 6C, separate control and codecs 235a and 235b are provided for the RJ11 connector 230a to be connected to the telephone exchange 30 and the RJ11 connector 230b to be connected to the handset 35 respectively. The control and codec 235a is connected through the isolation barrier 236 to a DAA 237, and thence to the RJ11 connector 230a. By contrast, the control and codec 235b is connected through the isolation barrier 236 to a subscriber line interface circuit (SLIC) 239, and thence to the RJ11 connector 230b. The function of the SLIC 239 is to act like a telephone central office to any analogue phone and provide all normal functions consumers expect for telephones, including powering and ringing the phone, converting analogue signals to digital and vice versa. Typically a subscriber line interface circuit (SLIC) and a codec provide these functions. SLICs and codecs can be purchased as separate ICs or as a single, monolithic CMOS IC.

It will be appreciated by the skilled addressee that many different architectures may be employed for the call handling device 200 to achieve the functionality described in this specification and the arrangements shown in Fig. 6A-C are non-limiting.

The call handling device 200 offers a number of functions/services including voicemail, call recording, call forwarding, unknown number blocking, spam blocking, out of hours handling, call history, fax, custom call routing and private branch exchange switchboard. However, it will be apparent to the skilled addressee that it is not essential to provide any more than one of these functions. A user may be able to program or set one or more modes providing the desired function(s) using a user interface UI 280. However, in preferred embodiments, the user interface 280 on the call handling device 200 is dispensed with and replaced with a reset button and an LED which indicates basic status information.

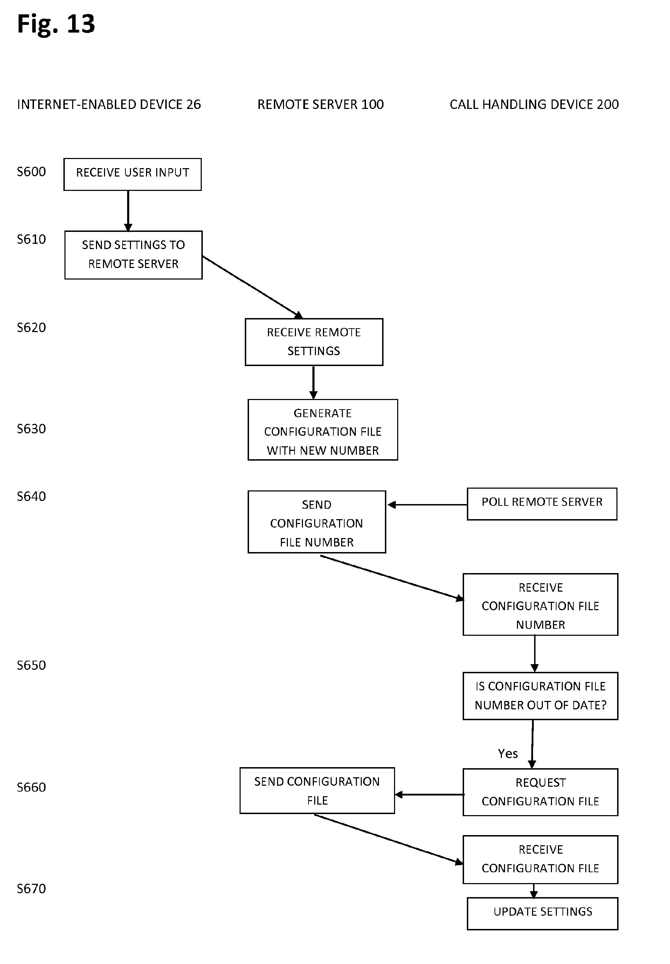

As shown in Fig. 5, the remote server 100 is connected over the internet 101 to a user's internet-enabled device 26, which the user can use to control the settings of the call handling device. In practice, the user's internet-enabled device 26 may be the same as the internet-enabled device 25 used on the premises 10, or may be a separate internet-enabled device. The user may go to a website especially provided for the purpose, log in using credentials unique to himself or to a specific call handing device 200 and update the settings of the call handling device 200 to change its functionality. Alternatively, the user may use an application (app) for example provided on a smart phone or tablet computer. Where the user logs into an account and has two or more call handling devices 200, he may then be able to choose which of the call handling devices the newly selected settings should be applied to. This is shown in Fig. 13, step S600, in which the internet-enabled device 26 receives user input to select one or more call handling devices 200 and change the settings for the selected device(s).

In step S610, the internet-enabled device 26 sends the settings to the remote server 100, which receives them in step S620 and creates a configuration file in step S630 for each affected call handling device 200. The generated configuration file supersedes any previous configuration file and is identified with a number, which may be alphanumeric and may represent the date and time. As illustrated in step S640, the call handling device 200 regularly polls the remote server 100 to determine whether the configuration file for that particular call handling device has been updated. In response to polling by a call handling device 200, the remote server 100 sends the number of the current configuration file stored by the remote server 100 for that call handling device.

In step S650, the call handling device 200 compares the received configuration file number with the configuration file number of the configuration file last used to update it. If the comparison indicates the last used configuration file has been superseded, the call handling device 200 downloads the latest configuration file from the remote server in step S660 and updates its settings based on the newly downloaded configuration file in step S670.

Preferably, the configuration file includes an instruction that tells the call handling device 100 when to poll the server next, for example every minute. In preferred embodiments, the server 100 cannot proactively contact the call handling device 200 and must wait for the call handling device 200 to make contact. However, this is not essential.

Non-limiting examples of the settings the user can update include:
- activating a voicemail mode;
- configuring the voicemail mode for example by recording one or more outgoing messages, setting the time before incoming calls are sent to voicemail, setting caller ID signals that will be sent straight to voicemail and so on;
- activating a call recording mode;
- configuring the call recording mode for example by setting times and caller ID signals to which call recording should apply and so on;
- activating a call forwarding mode;
- configuring the call forwarding mode for example by setting times and caller ID signals to which call forwarding should apply, setting one or more numbers to which calls should be forwarded, and so on;
- activating and configuring a spam blocking mode as discussed in more detail below; and
- activating and configuring a call routing mode as discussed in more detail below.

When the call handling device 200 sends call data to the remote server 100, it may either send instructions for processing the data in accordance with the downloaded configuration file, or, more preferably, the remote server 100 receives an identification of the call handling device 200 with the call data and processes the data received in accordance with the configuration settings it stores for that call handling device.

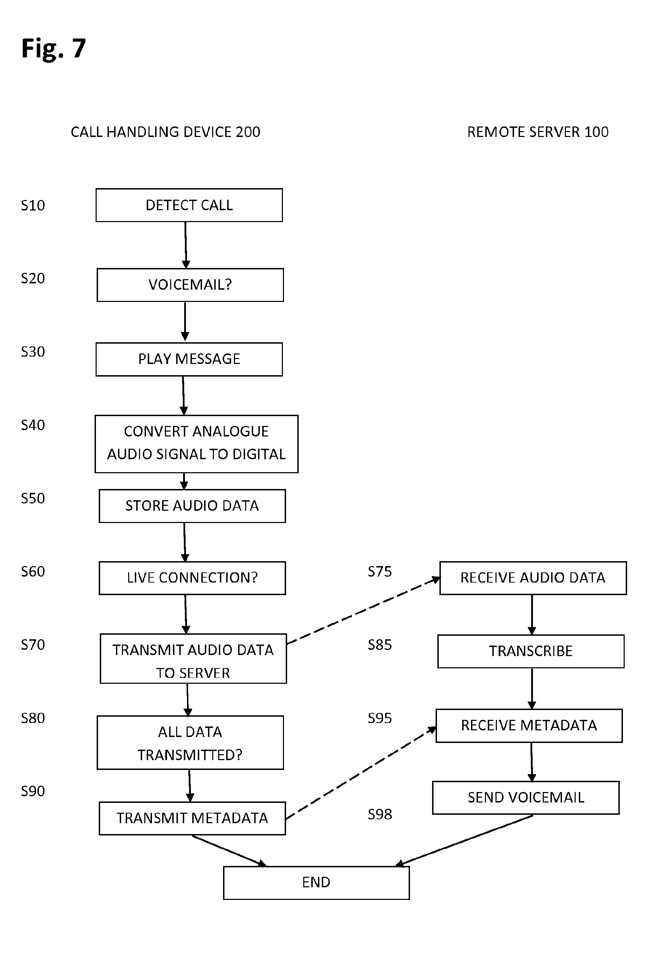

A general mode of operation of the call handling device 200 in voicemail mode is shown in Fig. 7. At step s10, an incoming call on an analogue audio line is detected by the PSTN module 260, which informs the DSP 240. The DSP 240 checks in step s20 whether the voicemail mode has been switched on. If it has not, the call is simply put through to telephone 35. Of course, if the telephone 36 is connected in parallel, the call will automatically go through to it. If the voicemail mode has been switched on, the process proceeds to s30 and the DSP 240 causes an outgoing message stored in the memory 250 or 252 to be played to the caller via the analogue audio interface 235 and the RJ11 socket 230. The caller is invited to leave a message, the audio signal of which the analogue audio interface 235 converts into a digital signal in s40 for processing by the DSP 240. The DSP 240 records the digital message to its internal data memory 252 in step s50. Once the call ends, as shown by the lack of audio for 30 seconds or a loop closed or similar signal, the recording stops. As the recording is made, the call handling device 200 splits the recording into chunks and, if it has a live connection to the remote server 100 in step s60, it immediately begins sending these chunks to the remote server 100 in step s70 together with an identification of the call handling device 200 and an indication that the data relates to a voicemail. The remote server 100 receives the data in step s75. This effectively creates a live stream to the server 100 of the incoming voicemail message, as the caller is leaving it. When the completed voicemail has been recorded in step s80, metadata about the call, including an identification of the caller (caller ID) is sent by the call handling device 200 in step s90 and received by the remote server 100 in step s95.

As the voicemail is being received by the server, it is preferably processed for voice to text transcription (s85) so that the voicemail is transcribed in real time, such that the transcript is ready almost as soon as recording has finished. By contrast, in the prior art transcription takes place after recording has ended and the present invention therefore provides a significantly faster service than was previously known. Transcription may be performed by a third-party transcription provider. Naturally, transcription may also take place in the present invention after the recording has ended, as in the prior art.

Once recording has ended, the remote server 100 sends the audio and/or the transcript of the voicemail to the user in step s98 via e-mail and/or a proprietary or third party smartphone application.

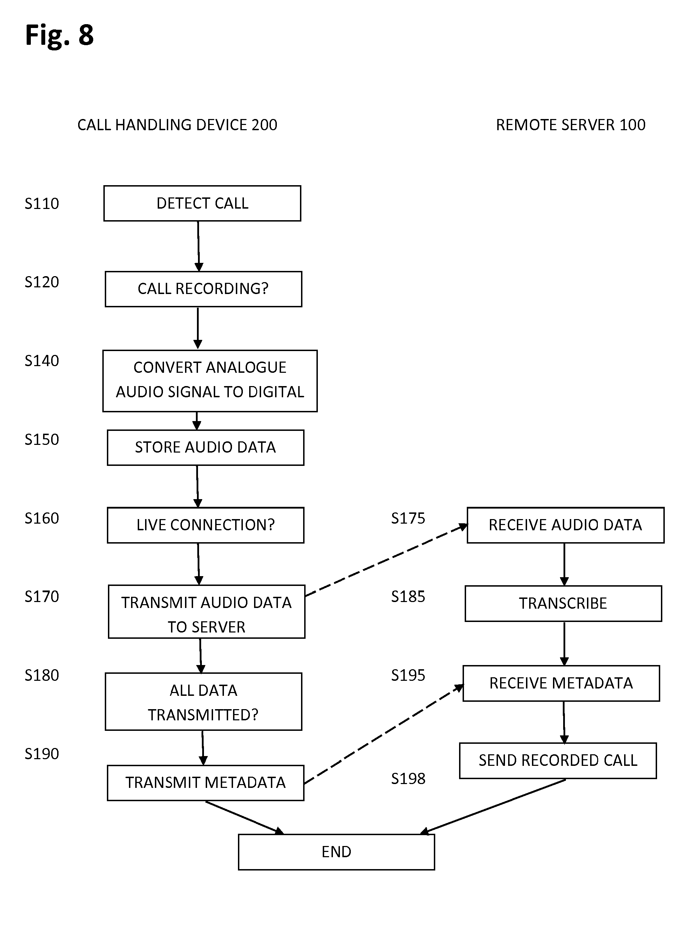

Fig. 8 shows an exemplary operation of the call handling device 200 in the call recording mode. The call handling device 200 starts by detecting a call in step s110. There are three types of call which may need to be recorded:
1. Outgoing calls
2. Incoming calls which are answered
3. Incoming calls which are forwarded and answered at the forwarding number or VOIP account.

Outgoing calls are detected by the "parallel pickup" signal produced when a telephone 35, or 36 is picked up. The call handling device 200 attached to the same line, can detect this signal. If a parallel pickup signal is detected in the absence of ringing, the call handling device 200 assumes that the pickup is the beginning of an outgoing call and, if it is in the call recording mode (s120), listens for DTMF tones, which reveal the number the user is dialling. The call handling device 200 stores the number as the number dialled and begins recording the audio from the line. Once the call ends, as shown by the lack of audio for 30 seconds or a loop closed or similar signal, the recording stops.

Incoming calls are detected by ringing, followed by a parallel pickup on the same line, or followed by a successful attempt by the call handling device 200 to connect the call to a forwarding number (discussed below). The incoming caller ID signal is detected when the line rings and is stored. Once the call ends, as shown by the lack of audio for 30 seconds, the recording stops.

For all three types of call, the number dialled or incoming caller ID signal (if present) and the recording are sent to the remote server 100 during the call, with the audio being handled in the same way as for voicemail, above.

Thus, as shown in Fig. 8, the DSP 240 checks in step s120 whether the call recording mode has been switched on. The call handling device 200 may be programmed to automatically record calls received from or made to a predetermined number, which is recognised by the DTMF tones identified in step s110 or caller ID signal, again recognised in step s110.

If the call forwarding mode is activated, the process proceeds to s140 and the audio signal received from both or all parties to the call is converted by the analogue audio interface 235 into a digital signal for processing by the DSP 240. The DSP 240 records the digital message to its internal data memory 252 in step s150. Once the call ends, as shown by the lack of audio for 30 seconds or a loop closed or similar signal, the recording stops. As the recording is made, the call handling device 200 splits the recording into chunks and, if it has a live connection to the remote server 100 in step s160, it immediately begins sending these chunks to the remote server 100 in step s170 together with an identification of the call handling device 200 and an indication that the data relates to a call recording. Alternatively, the call handling device 200 streams the audio directly to the remote server 100 or, in the absence of a live connection to the remote server, the call handling device records the audio and streams it or uploads it to the server when the connection is re-established. The remote server 100 receives the data in step s175. This effectively creates a live stream to the server 100 of the audio data of the call, as the call is in progress. When the call has been recorded in step s180, metadata about the call, including caller ID is sent by the call handling device 200 in step s190 and received by the remote server 100 in step s195.

As the audio recording is being received by the server, it can be processed for voice to text transcription (s185) so that the audio recording is transcribed in real time, such that the transcript is ready almost as soon as recording has finished. Again, transcription may be performed by a third-party transcription provider.

Once recording has ended, the remote server 100 sends the audio and/or the transcript of the call recording to the user in step s198 via e-mail and/or a proprietary or third party smartphone application.

The call handling device 200 is designed not to require a live internet connection in order to work, and can also work with intermittent or slow connections. The call handling device 200 downloads all of its software and configuration from the remote server 100, and since the call handling device 200 has local memory 252, 254, it is able to store some audio locally (for example up to a few hours' worth depending on the size of the local memory, whether from voicemail or call recording. Once the internet connection is restored, the local audio recordings are uploaded to the remote server 100 and the call handling device 200 checks for new software and configuration.

During the period without an internet connection nearly all features work completely normally. The only exception to this is call forwarding, which relies on VOIP as discussed below, and VOIP requires a live connection between the call handling device 200 and the remote server 100 in order to work. Additionally the remote server 100 will not be notified of calls handled by the call handling device 200 and therefore will not be able to send notifications or call data to the user until the connection between the call handling device and remote server is re-established. If the internet connection is offline for such a long time that the internal memory of the call handling device 200 fills up, then at that point the call handling device 200 would no longer be able to record audio, so the voicemail and call recording features would no longer work, but all other features would work normally.

Turning to call forwarding, instead of requiring call forwarding to be undertaken by the PSTN network operator (as shown in Fig. 3) or requiring one line for an incoming call and a second line for the outgoing forwarded call, the call handling device 200 forwards calls using VOIP.

As discussed above, during set up of the call handling device 200, the remote server 100 sends the call handling device 200 a configuration file. This configuration file preferably contains VOIP settings so that when a call comes in, the call handling device 200 already has all of the information it requires to forward the call. During set up, the user will also provide a predefined forwarding number or VOIP account. The user may set the call handling device 200 to a call forwarding mode indefinitely, for a predetermined time or if the number of rings reaches a predetermined limit.

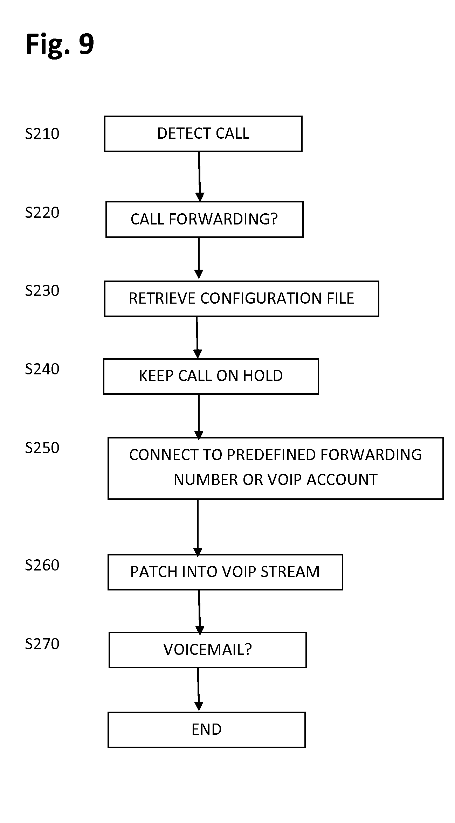

As shown in Fig. 9, if the user places the call handling device 200 in call forwarding mode, a call is detected (s210) and call forwarding is triggered (s220), the call handling device 200 uses a previously-downloaded configuration file (s230) and uses it to instruct its VOIP (SIP/RTP) stack to forward the call via VOIP. The VOIP stack may be a third party stack. While keeping the incoming call on hold (s240), the device attempts to connect to the user's predefined forwarding number or VOIP account via VOIP (s250). When the connection is made, the call handling device patches the incoming call into the VOIP stream (s260) so that the caller can speak to the user over the VOIP connection. It will be appreciated the call handling device 200 may connect to a VOIP provider 550 directly or via the remote server 100 (which may also act as a VOIP provider). The forwarding number may either be a VOIP account or a telephone number and the VOIP provider may process it as required to make connection to the final destination. If the user does not pick up or a connection cannot be made, the device can instead take a voicemail, as discussed above and shown in Fig. 7.

Unknown number blocking will now be discussed. PSTN operators in different countries use varying methods to transmit the number of an incoming call to equipment at the POTS subscriber's end of the line. In some territories the caller ID signal is transmitted before the line starts ringing, whereas in others it might be transmitted between the first and second rings, for example.

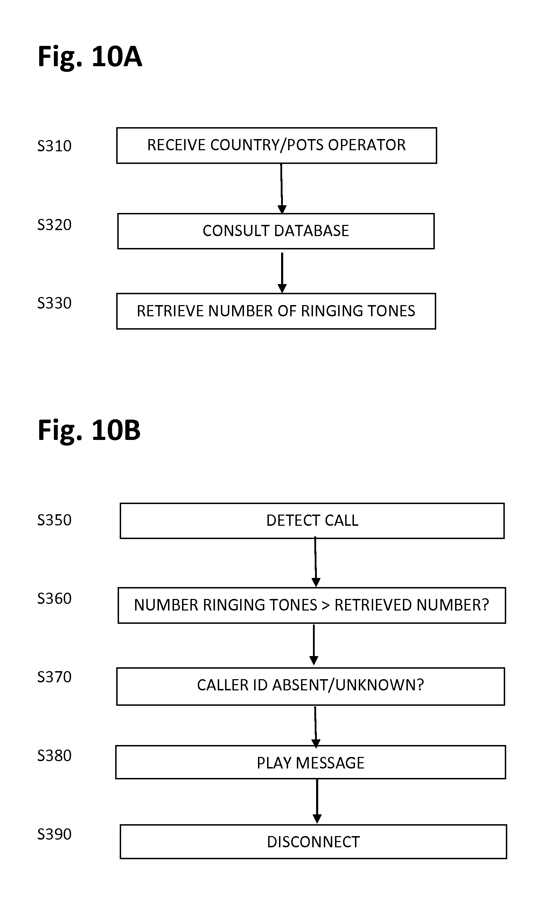

As shown in Fig. 10A, when a call handling device 200 is first activated by the user, the user is asked to specify the country and/or POTS operator (s310). This information enables the call handling device 200 to consult a database in step (s320) of caller ID signalling for each POTS operator and use this information to determine how many rings it should wait for in order to be certain that no caller ID signal, or a "caller unknown" caller ID signal has been transmitted (s330).

If the call handling device 200 has been set to block calls from unknown numbers and it detects an incoming call (s350 of Fig. 10B), it will determine in s360 whether the number of ring tones has exceeded the number determined in s330. If the determined number of ringtones has been exceeded, the call handling device 200 establishes in s370 whether either no caller ID signal has been received or an "unknown" caller ID signal has been received. If so, the call handling device 200 may play a short message to the caller (s380) and disconnect them (s390). Thus, the call handling device 200 will pick up as soon as it can establish that no caller ID signal has been transmitted, play a short message to the caller and disconnect them.

The call handling device 200 in combination with the remote server 100 can also perform spam blocking functions.

Users can select calls which they have received or which are in progress and add them to a blacklist. This means that when the caller calls again from the same number, the call handling device 200 will pick up immediately, play a recorded message asking the caller not to call again, and disconnect the caller.

In addition, the call handling device 200 can retrieve and store locally a global spam caller database held by the remote server 100 and treat any call from a number on the database in the same way as a call on the user's personal blacklist, as above, or in a different way, as the user may specify.

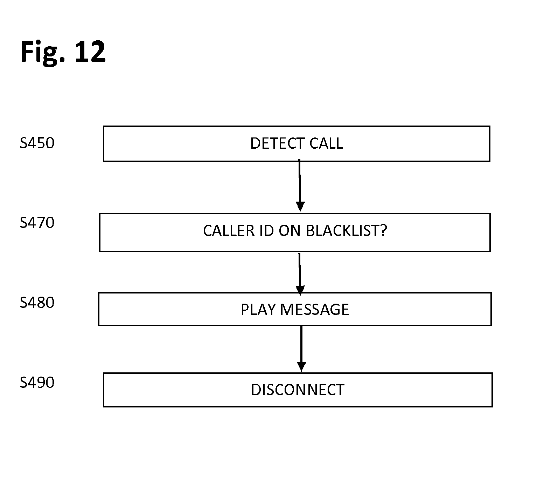

In more detail, as shown in Fig. 12, when the call handling device 200 detects a call in s450, it checks to see whether the caller ID is on either the local blacklist or the global blacklist in step s470. If it is, the call handling device 200 plays a recorded message in step s480 and disconnects the call in step s490.

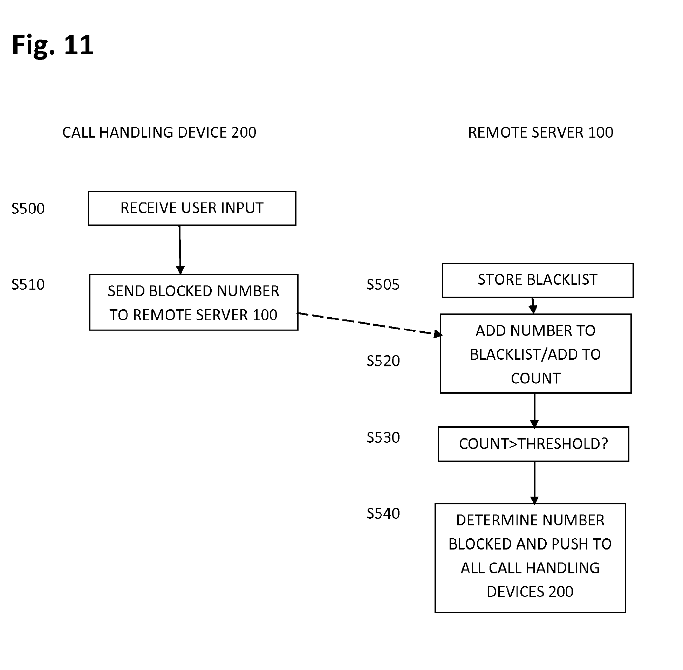

Numbers for the global spam caller database can be gathered based on data received from a plurality of call handling devices 200 connected to the remote server 100. In particular, as shown in Fig. 11, when users add a telephone number or other caller ID to their personal blacklist (s500), this information can be sent to the remote server 100 (s510). Although Fig. 11 shows the call handling device sending the blocked number to the remote server 100, users can add telephone numbers or other caller IDs to blacklists either by using the keypad on the telephone or via the UI 280 or preferably using the internet-enabled device 26. The remote server 100 stores the global spam blacklist (s505) and adds each received number to the global spam blacklist or, if it is already there, counts an extra 'vote' for that number to be added to the global spam caller blacklist (s520). Once a predetermined number of 'votes' for a particular number have been received (multiple users adding the same number), as determined in step s520, the remote server 100 adds it automatically to the global spam caller database (s540).

The global spam caller database is held on the remote server 100 and downloaded for local storage on each call handling device 200. Alternatively, the call handling device 200 can interrogate the remote server 100 directly. Conversely, the local blacklist is held on the local storage of the call handling device 200 but could be stored on and interrogated from the remote server 100. The global spam caller database can be customised by the remote server 100 for each call handling device 200 which uses it, for example the remote server 100 may only provide UK-based call handling devices 200 with the numbers of spam callers known to frequently target the UK.

The global spam database can be made more comprehensive by gathering the telephone numbers used by people and organisations making unsolicited sales or spam calls and compiling them into the global database. In addition, call handling devices 200 can be set up on new telephone lines and then post the telephone number on public websites. Unscrupulous spam callers use software which trawls the internet for such publicly-available telephone numbers and targets them with spam calls. It can therefore be assumed that any call received by call handling devices 200 on such 'trap' numbers are from spam callers and the corresponding caller IDs can be added to the global spam caller database with just a single 'vote'.

Users can also specify periods of time, on particular dates or on a recurring basis, when they want the call handling device 200 to pick up immediately and answer calls in a user-prescribed manner. They can also specify time periods during public holidays in the user's area, so that Christmas Day has the same out of hours period as a Sunday, for example. For businesses, this means that the call handling device 200 handles the call immediately when the business is closed, and callers are not left hanging on. For consumers, this has the benefit that the telephone will ring at most for one ring when they do not want to be disturbed, for example late at night. In cases where all of the telephones connected to the line are telephones 235 connected via the second telephone port 230b of the call handling device 200, thus forming an analogue/audio PSTN interface, instead of being connected directly to the line, the call handling device 200 is able to stifle all ringing, by using a relay to disconnect the other handsets when the line is called.

The user may also set up a whitelist, so that when a call is received from a number on the whitelist the call is not immediately transferred to voicemail but is instead left to ring (for example for a predetermined number of rings before being transferred to voicemail), or is forwarded to another number.

In a further example, the call handling device 200 may use a relay to allow time to ensure a caller ID is received and checked against a spam blacklist before the phone rings. This is particularly useful where the PSTN provider only transmits the caller ID signal after the phone starts ringing. In this way, the call handling device 200 can properly stifle ringing heard by a user due to calls from blacklisted caller IDs. Alternatively, unwanted handset ringing may be suppressed by electronics on the chipset.

There are three scenarios in which it is desirable to stop handsets from ringing when a call comes in:
1. When the line rings during an Out of Hours period;
2. When the line rings and the caller is on a blacklist; or
3. When the line rings and either Spam Call Blocking or Out of Hours with whitelisting are active, but the caller ID has not yet been received, as discussed above.

In these scenarios, as soon as the line rings, the device should cut off any handset connected via the device's RJ11 ports 230a, 230b so that they stop ringing. If it is ascertained that the call can go through (i.e. the caller ID is not blacklisted, or out of hours caller is whitelisted), or the ringing has stopped, the RJ11 port to which the handset is connected 230a, 230b should be reconnected. The device detects which of the RJ11 ports 230a, 230b is connected to a handset and which is connected to the POTS incoming line by 'listening' for PSTN signals.

The call handling device 200 preferably uses the same methods employed for call recording to determine the number dialled for outgoing calls and the caller ID signal for incoming calls. Every call can be logged along with the type of call (outgoing call, incoming call which the caller picked up, incoming call which the call handling device 200 picked up (including blocked calls and forwarded calls) and incoming calls which went unanswered), its duration and the other party's number.

In the same way as the call handling device 200 records audio for a call recording, the call handling device 200 can also record fax signals as audio. For incoming faxes this requires tones to be transmitted which invite the caller's fax machine to transmit further pages. During the fax call, the audio recording of the fax tones is uploaded to the remote server 100 which decodes it into an image, optically scans it for recognisable text, and provides an exportable text extract and an image of the fax to the user. The call handling device 200 may also have native fax handling capabilities, in which case it may send a decoded fax image to the server.

In a custom call routing mode, users can specify rules by which calls are routed. They can do this by setting criteria and actions via the UI, which may lead on from one another. For example, a user may decide that if a call is received from telephone number 0123456789 between 10:00 and 17:00 on a public holiday in Sweden, the call handling device 200 should ask the caller to press or say 1 to hear the national anthem, or press or say 2 to be put through to a specified telephone number (anywhere else in the world) via call forwarding. As previously explained, outgoing messages/recordings can be transferred to the remote server 100 using the internet-enabled device 26, which subsequently includes them in the configuration file downloaded by the call handling device 200. Alternatively the outgoing messages/recording can be referenced in the configuration file for download from the remote server separately to the configuration file.

Criteria can be any combinations of:
- Caller selections (press or say 1 for x, press or say 2 for y etc)
- Caller's telephone number
- Time, day and/or date of the call

Actions can be any combinations of:
- Play a pre-recorded sound
- Record what the caller is saying
- Try to forward the call
- Disconnect the call
- Delay
- Wait for the caller to send a DTMF tone (e. g. "press 1 for sales")

In order to provide a switchboard (private branch exchange), a call handling device 200 of the multiple line variety can accept multiple telephone lines and perform switchboard features, between both physical landlines and VOIP lines. It does this by providing POTS to analogue handsets (wired, or wireless via a DECT transceiver) and VOIP clients. The switchboard features include:
- Call monitoring
- Call parking and retrieval
- Call queuing
- Call waiting
- Conference calls and three-way calls
- Remote call pickup
- Roaming extensions
- Transferring calls from one handset to another

As previously discussed, the remote server 100 is able to send call recordings, voicemails, transcriptions and other information to a destination such as an e-mail address associated with the call handling device 200. In a preferred embodiment, the remote server 100 may provide an inbox interface where users can access and archive or download their voicemails, call recordings, faxes, call history etc, and a configuration interface where users can access and edit the settings for their server account and call handling device 200. The configuration interface on the remote server 100 may be provided as well as or instead of the UI 280 on the call handling device 200.

The remote server 100 facilitates the service offered by the present invention by processing data, sending alerts and synchronising address books containing telephone numbers with third party services.

The present invention has two main audiences:
1. Consumers with single landlines or a small Private Branch Exchange
2. Micro businesses and small businesses with single landlines or a Private Branch Exchange

It is anticipated that consumers will use the present invention to improve communication via their home landlines by ensuring that they receive messages or forwarded calls when they are away from home. It is also anticipated that they will use the present invention to reduce disturbance from their landline by using the call handling device 200 to block spam calls or calls received when they are sleeping. They may also use it to run a small telephone network within their home.

It is anticipated that micro and small businesses will use the present invention to improve communication with customers and business partners via their landlines by ensuring that they receive messages or forwarded calls when they are away from the office. Using custom call routing, businesses may also ensure that calls and messages are routed to the most appropriate person within the business to deal with each type of customer enquiry. Additionally businesses are likely to want to record calls for reasons of training or quality, or to act as a record in the event of legal proceedings. It is also anticipated that businesses will use the present invention to pick up calls instantly when the business is closed, and to reduce disturbance by using the present invention to block spam. They may also use it to run a small telephone network within their business, spanning one or more premises in one or more countries, with one or more landlines and/or VOIP lines.

The foregoing description has been given by way of example only and it will be appreciated by a person skilled in the art that modifications can be made without departing from the scope of the present invention.

For example, it will be appreciated that the remote server 100 (or remote computer) may be distributed or split across two or more locations. For example, a computer at one location may communicate with the call handling device 200 for set up and downloading of configuration files and a computer at another location may communicate with the call handling device 200 for receiving call data. Similarly, it will be appreciated that while the call handling device 200 is intended to be provided as a single unit it may also be provided as two or more distributed modules. In addition, it is envisaged that the UI 280 may be provided by a user connecting a computer (desktop, laptop, tablet computer, smartphone etc) to the call handling device 200 using an Ethernet cable (for example so that two or more RJ45 sockets 220 are provided) or wirelessly. It is also envisaged that the call handling device 200 will be provided separately from the broadband connection device 20. However, the broadband connection device (router) 20 and the call handling device 200 may be provided as a single unit, which may or may not also provide Wi-Fi capabilities. Additionally, the call handling device 200 can be incorporated into another device, such as a DECT telephone base station.

As previously hinted, although a connection to the PSTN connection within the premises is required, the call handling device 200 may connect to other telephones 35, 36 by DECT or other wireless means.

## Claims

1. A call handling device (200) comprising:
• a broadband internet connector (220);
• a telephone landline connector (230);
• an analogue audio interface (235) for converting an analogue audio signal into a digital signal;
• a processor (240); and
• a memory (250, 252, 254),
• the call handling device (200) being adapted to
• detect a call via the telephone landline connector;
• convert analogue audio data received from the telephone connector into digital audio data; and
• send the digital audio data to a remote computer (100) by means of the broadband internet connector.

2. A call handling device (200) according to claim 1, wherein, when a call is received, the processor (240) is arranged to store at least one of the digital audio data and other call information relating to the call in the memory (252) and to send the stored data to the remote computer (100).

3. A call handling device (200) according to claim 1 or claim 2 configured further to send to the remote computer (100) an identifier of the call handing device.

4. A call handling device according to any one of the preceding claims configured to receive configuration data from a remote computer (100) for setting a mode of operation of the call handling device.

5. A call handling device (200) according to claim 4 having a voicemail mode, wherein the configuration data includes a voicemail message.

6. A call handling device (200) according to claim 4 or claim 5 having a call routing mode, the configuration data including routing data for routing a received call depending on an input from the caller.

7. A call handling device (200) according to any one of claims 4 to 7 having a time-based handling mode for handling a call based on the current time, day and/or date, the configuration data setting a call handling action corresponding to a predetermined time of day on a specific day and/or date or range of days and/or dates.

8. A call handling device (200) according to any one of the preceding claims having a call recording mode.

9. A call handling device (200) according to claim 8, configured to detect outgoing calls by detecting a parallel pick up in the absence of a ring on the line and to store an identification relating to the dialled number; and to detect an incoming call by detecting a ring on the line and to store the caller ID of the incoming call.

10. A call handling device (200) according to any one of the preceding claims having a call forwarding mode, the call handling device (200) storing a configuration file for forwarding of the call via VOIP over the broadband connection (20).

11. A call handling device (200) according to any one of the preceding claims having a call blocking mode, the call handling device (200) storing at least one of a predetermined duration and a predetermined number of rings needed to determine whether a caller ID signal is received and being configured to disconnect an incoming call that has not been associated with a caller ID signal after the predetermined duration or number of rings.

12. A call handling device (200) according to any one of the preceding claims, the call handling device (200) storing a blacklist of caller IDs and being configured to disconnect a call associated with a caller ID on the blacklist.

13. A call handling device (200) according to claim 12, the call handling device (200) being configured to download the caller IDs for the blacklist from a remote computer (100).

14. A call handling device (200) according to claim 12 or claim 13, the call handling device (200) being configured to send or cause the caller IDs on the blacklist to be sent to a remote computer (100).

15. A computer (100) arranged to
• receive settings for a call handling device for setting a operation of a call handling device (200) according to any one of the preceding claims,
• send a configuration file for instructing the call handling device to operate in accordance with the settings,
• receive call data from the call handling device, and
• process the call data in accordance with the settings.
